# EUROPEAN PATENT APPLICATION

(11) **EP 4 625 505 A1**
(43) Date of publication of application: **01.10.2025**
(21) Application number: 24823657.2
(22) Date of filing: 10.06.2024
(51) Int. Cl.: H01M 4/04, B05B 1/20, B05B 9/00, B05B 9/04, B05B 12/12, F26B 21/06, F26B 25/06

(54) **APPARATUS FOR DRYING ELECTRODE SHEET AND METHOD FOR DRYING ELECTRODE SHEET USING SAME**

(30) Priority: 12.06.2023 KR 20230074575
(71) Applicant: LG Energy Solution, Ltd., Seoul 07335 (KR)
(72) Inventor: PARK, Min Gu, Daejeon 34122 (KR); PARK, Joon Sun, Daejeon 34122 (KR); LEE, Taek Soo, Daejeon 34122 (KR)
(74) Representative: Plasseraud IP
(86) International application number: PCT/KR2024/007912
(87) International publication number: WO 2024/258137

(57) **Abstract**

An electrode sheet drying device may include a drying oven, a plurality of spray nozzles, a flow path configured to guide the water to the plurality of spray nozzles, and a pump capable of moving the water through the flow path. The plurality of spray nozzles may be disposed within the drying oven, and disposed along a width direction of an electrode sheet, and spray water onto the electrode sheet. The flow path may include one or more positive temperature coefficient (PTC) heaters, which may heat the water to be sprayed onto the electrode sheet, such that water above a certain temperature may be supplied to the electrode sheet. The water sprayed onto the electrode sheet may prevent cracking and wrinkling from occurring in the non-coated part, thereby improving stability of the electrode.

## Description

### CROSS-REFERENCE TO RELATED APPLICATIONS

The present application is a national phase entry of International Application No. PCT/KR2024/007912 filed on June 10, 2024, which claims the benefit of priority to Korean Patent Application No. 10-2023-0074575 filed on June 12, 2023, the disclosures of which are incorporated herein by reference in their entireties.

### [Technical Field]

The present disclosure relates to a drying device for an electrode sheet and a drying method for an electrode sheet using the same, and more particularly to a drying device for an electrode sheet and a drying method for an electrode sheet using the same, which can improve the stability of electrodes by preventing defects from occurring.

### [Background]

Secondary batteries are capable of being charged and discharged multiple times and are used as energy source for various electronic devices. The electrodes of the lithium secondary battery may be formed by a drying process of drying the electrode sheets, and the drying process may be performed by a drying device including a drying oven.

The electrode sheet may be formed by coating an electrode slurry including an active material on a current collector such as aluminum (Al), copper (Cu), foil, or the like. In this case, the electrode sheet may include a coated part on which an electrode slurry is applied and a non-coated part on which no electrode slurry is applied. In the drying process, the solvent in the electrode slurry of the coated part is evaporated by drying, and thereby the electrode slurry of the coated part shrinks. The force of shrinkage of the electrode slurry of the coated part in the 1 drying process acts as a stress on the current collector of the non-coated part, which may cause electrode defects such as wrinkles and cracks. Therefore, research is needed on a technology that can improve the safety of the electrode.

### [Technical Problem]

Accordingly, the problem that the technical ideas of the present disclosure seeks to solve is to provide an electrode sheet drying device with improved electrode stability and a method for drying electrode sheet using the same.

### [Technical Solution]

According to exemplary aspects, present disclosure provides an electrode sheet drying device may include: a drying oven for drying an electrode sheet formed by applying a slurry onto an electrode current collector, a plurality of spray nozzles disposed within the drying oven, disposed along a width direction of the electrode sheet, and configured to spray water onto the electrode sheet, a flow path configured to guide the water to the plurality of spray nozzles, and a pump capable of moving the water through the flow path, wherein the flow path may include one or more positive temperature coefficient (PTC) heaters therein.

According to exemplary aspects of present disclosure to solve the above-mentioned problems, an electrode sheet drying method is provided. The electrode sheet drying method includes a pump supplying water to a flow path having an inlet and an outlet, a first temperature sensor measuring a temperature of the water entering the inlet, a control part determining a need to operate the positive temperature coefficient (PTC) heater based on the temperature of the water, turning on the PTC heater included within the flow path, if the control part determines that it is necessary to operate the PTC heater, and spraying the water, which has been raised in temperature by the PTC heater, onto the electrode sheet from a plurality of spray nozzles connected to the outlets of the flow path, wherein the temperature of the water sprayed from the plurality of spray nozzles may be in the range of 50°C to 90°C.

### [Advantageous Effects]

An electrode sheet drying device according to exemplary aspects of the present disclosure includes a plurality of spray nozzles for spraying water onto an electrode sheet and a flow path including a PTC heater therein. The PTC heater is capable of heating the water to be sprayed onto the electrode sheet, such that water above a certain temperature can be supplied to the electrode sheet. The water sprayed on the electrode sheet can prevent cracks and wrinkles from occurring in the non-coated part, thereby improving the stability of the electrode.

The effects that can be obtained from the exemplary aspects of the present disclosure are not limited to those mentioned above, and other effects not mentioned can be clearly derived and understood by a person having ordinary knowledge in the technical field to which the exemplary aspects of the present disclosure belong from the following description. In other words, unintended effects of practicing the exemplary aspects of the present disclosure can also be derived from the exemplary aspects of the present disclosure by a person having ordinary knowledge in the technical field.

### [Brief Description of the Drawings]

FIG. 1 is a drawing illustrating an electrode sheet drying device, according to exemplary aspects.
FIG. 2 is a drawing illustrating electrode sheets in a drying oven, according to exemplary aspects.
FIG. 3 is a drawing illustrating an electrode sheet drying device, according to exemplary aspects.
FIG. 4 is a cross-sectional perspective view of a flow path including a PTC heater, according to exemplary aspects.
FIG.5 is a cross-sectional perspective view of a flow path including a PTC heater, according to another exemplary aspect.
FIG. 6 is a drawing illustrating an electrode sheet drying device, according to another exemplary aspect.
FIG. 7 is a flowchart illustrating an electrode sheet drying method, according to another exemplary aspect.
FIG. 8 is a flowchart illustrating an electrode sheet drying method, according to other exemplary aspects.

According to exemplary aspects, to solve the above-mentioned problems, an electrode drying device is provided. According to some exemplary aspects, an electrode sheet drying device may include: a drying oven for drying an electrode sheet formed by applying a slurry onto an electrode current collector; a plurality of spray nozzles disposed within the drying oven, disposed along a width direction of the electrode sheet, and configured to spray water onto the electrode sheet; a flow path configured to guide the water to the plurality of spray nozzles; and a pump capable of moving the water through the flow path, wherein the flow path may include one or more positive temperature coefficient (PTC) heaters therein.

According to some exemplary aspects, the flow path includes a plurality of PTC heaters extending along an extending direction of the flow path, and the plurality of PTC heaters may be equally spaced apart in the circumferential direction of the flow path.

According to some exemplary aspects, the length of each of the plurality of PTC heaters ranges from 20% to 80% of the total length of the flow path.

According to some exemplary aspects, the flow path comprises a plurality of PTC heaters, wherein the plurality of PTC heaters may be equally spaced apart along an extending direction of the flow path.

According to some exemplary aspects, the flow path has a double-pipe shape including an inner pipe and an outer pipe surrounding the inner pipe, wherein the PTC heater may be positioned between the inner pipe and the outer pipe.

According to some exemplary aspects, the flow path may include a plurality of thermally conductive blades protruding inwardly.

According to some exemplary aspects, the electrode sheet drying device further includes a control part, wherein the pump comprises a first temperature sensor (thermistor), wherein the control part may be capable of regulating operation of the PTC heater based on a temperature of the water measured by the first temperature sensor.

According to some exemplary aspects, the electrode sheet drying device further includes a first temperature sensor and a second temperature sensor, wherein the first temperature sensor may be configured to measure the temperature of the water entering the flow path, and the second temperature sensor may be configured to measure the temperature of the water heated by the PTC heater downstream of the PTC heater.

According to some exemplary aspects, the first temperature sensor may be included in the pump, and the second temperature sensor may be included in the flow path.

According to some exemplary aspects, the first temperature sensor and the second temperature sensor may be included in the PTC heater.

According to some exemplary aspects, the electrode drying device further includes a control part, wherein the control part may determine whether to operate the PTC heater based on a temperature of the water detected by the first temperature sensor and the second temperature sensor.

According to some exemplary aspects, the water sprayed onto the electrode sheet may have a temperature in the range of 50°C to 90°C.

According to some exemplary aspects, the electrode sheet drying device further includes a storage tank in which the water to be supplied to the plurality of spray nozzles is stored, wherein the flow path may further include a flow control part.

According to exemplary aspects of present disclosure to solve the above-mentioned problems, an electrode sheet drying method is provided. The electrode sheet drying method includes a pump supplying water to a flow path having an inlet and an outlet, a first temperature sensor measuring a temperature of the water entering the inlet, a control part determining a need to operate the positive temperature coefficient (PTC) heater based on the temperature of the water, turning on the PTC heater included within the flow path, if the control part determines that it is necessary to operate the PTC heater, and spraying the water, which has been raised in temperature by the PTC heater, onto the electrode sheet from a plurality of spray nozzles connected to the outlets of the flow path, wherein the temperature of the water sprayed from the plurality of spray nozzles may be in the range of 50°C to 90°C.

According to some exemplary aspects, after the step of operating the PTC heater, the electrode sheet drying method further includes a second temperature sensor included in the flow path and located downstream of the PTC heater measuring the temperature of the water, wherein the control part turns off operation of the PTC heater if the temperature of the water as measured by the second temperature sensor is in the range of 70°C to 90°C.

### [Detailed Description]

The following is a detailed description of the present disclosure. Prior to this, it should be noted that the terms or words used in this specification and the claims are not to be construed in their ordinary or dictionary sense, but rather in a sense and concept consistent with the technical idea of the disclosure, based on the principle that the inventor may properly define the concept of a term to best describe his/her disclosure.

Accordingly, it is to be understood that the aspects described herein and the configurations illustrated in the drawings are only the most preferred aspects of the disclosure and are not intended to be exhaustive of the technical ideas of the disclosure, and that there may be various equivalents and modifications that may be substituted for them at the time of filing.

Furthermore, in describing the disclosure, specific descriptions of related known configurations or features are omitted where it is determined that such detailed descriptions would obscure the essence of the disclosure.

Because the aspects of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### Electrode sheet drying device

### (First aspect)

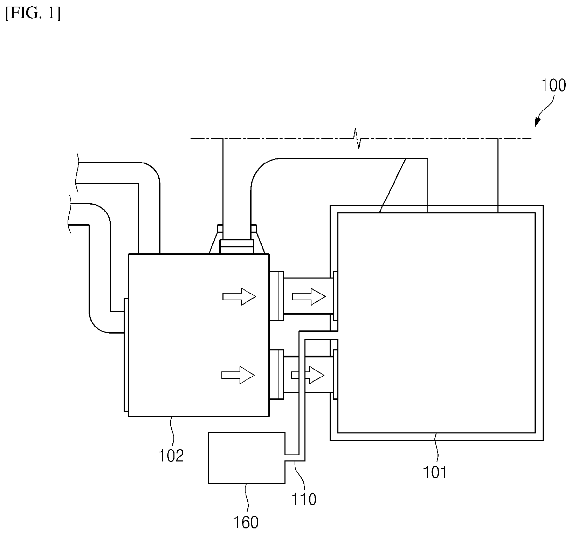

FIG. 1 is a drawing illustrating an electrode sheet drying device, according to exemplary aspects.

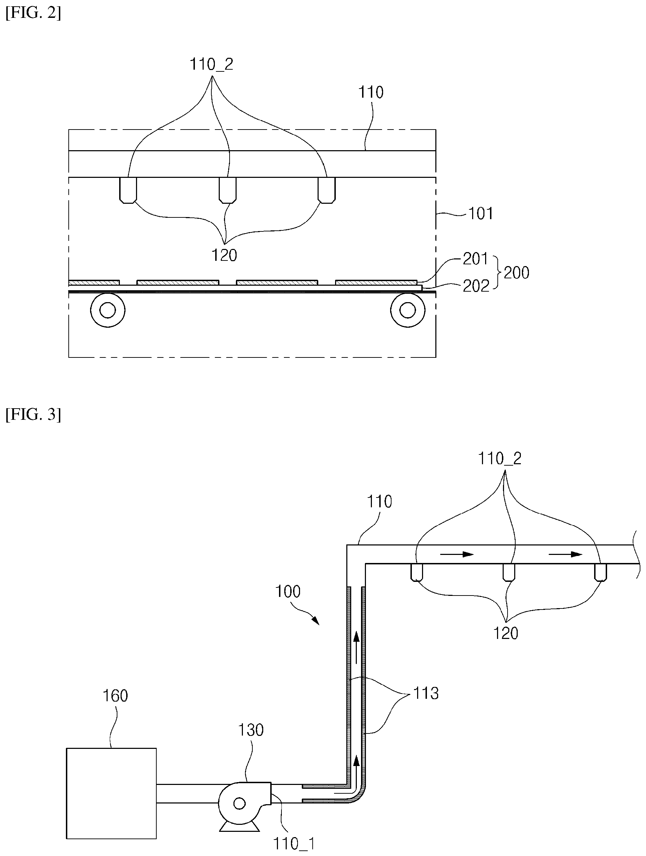

FIG. 2 is a drawing illustrating electrode sheets in a drying oven, according to exemplary aspects.
FIG. 3 is a drawing illustrating an electrode sheet drying device, according to exemplary aspects.

Referring to FIGS. 1 through 3, an electrode sheet drying device 100 may include a drying oven 101, a hot air supply device 102, a flow path 110, a plurality of spray nozzles 120, a pump 130, and a storage tank 160. The electrode sheet drying device 100 may be configured to dry electrode sheets 200 traveling within the drying oven 101 with hot air supplied from the hot air supply device 102. The hot air supply device 102 is a drying means. The drying means is not limited as long as it is any means for drying the electrode sheet 200 by supplying thermal energy to the electrode sheet 200.

The electrode sheet 200 may be formed by applying the slurry 201 on a current collector 202. The electrode sheet 200 may include a coated part with the slurry 201 applied to the current collector 202 and a non-coated part without the slurry 201 applied to the current collector 202.

The electrode sheet drying device 100 may provide the traveling electrode sheet 200 with water traveling through the flow path 110. The flow path 110 may include an inlet 110_1 into which the water flows and an outlet 110_2 out of which the water flows. A plurality of spray nozzles 120 may be disposed within the drying oven 101 to spray the water onto the traveling electrode sheet 200. According to exemplary aspects, the plurality of spray nozzles 120 may be disposed along a width direction of the electrode sheet 200. The plurality of spray nozzles 120 may be connected with the outlet 110_2 of the flow path 110, such that the water traveling through the flow path 110 may be sprayed onto the electrode sheet 200 through the plurality of spray nozzles 120. According to exemplary aspects, the water may be sprayed onto the non-coated part of the electrode sheet 200.

The pump 130 may provide power for the water to move through the flow path 110. The pump 130 may be located inside the storage tank 160, or it may be located outside of the storage tank 160.

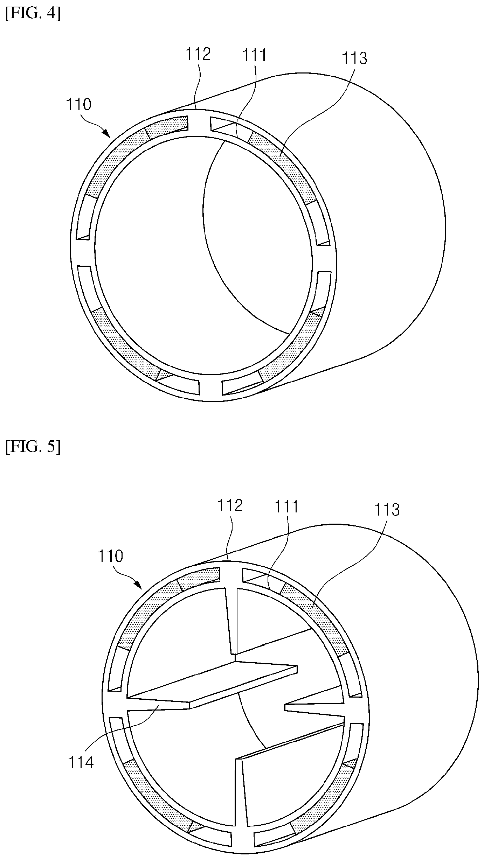

FIG. 4 is a cross-sectional perspective view illustrating a flow path including a PTC heater, according to exemplary aspects.

FIG. 5 is a cross-sectional perspective view illustrating a flow path including a PTC heater, according to another exemplary aspect.

Referring to FIGS. 4 and 5, the flow path 110 may include one or more positive temperature coefficient (PTC) heaters 113 therein. The PTC heater 113 may be an electrical heating element utilizing a PTC thermistor. The PTC thermistor may be a resistor whose resistance value is sensitive to changes in temperature. For example, as the temperature increases, the resistance value may increase, thereby restricting the flow of current. Accordingly, the PTC heater 113 may facilitate heating water to a uniform temperature.

The PTC heater 113 may prevent the temperature of the water traveling within the flow path 110 from being altered by the external environment. This allows the electrode sheet drying device 100 to provide water with a constant temperature range to the electrode sheet 200. Further, utilizing the PTC heater 113 to heat the water traveling through the flow path 110 may reduce the time required for heating compared to heating all of the water in the storage tank 160.

The flow path 110 may have a double-pipe shape including an inner pipe 111 and an outer pipe 112 surrounding the inner pipe 111, and the PTC heater 113 may be positioned between the inner pipe 111 and the outer pipe 112. The inner piping 111 may be configured to transfer heat emitted by the PTC heater 113 to the water traveling within the flow path 110. The inner pipe 111 may include a thermally conductive material. The outer pipe 112 may be configured so that the PTC heater 113 is not affected by external temperatures. Further, the outer pipe 112 may be configured to prevent heat emitted by the PTC heater 113 from escaping to the outside. According to exemplary aspects, the thickness of the inner pipe 111 may be thinner than the thickness of the outer pipe 112. Thus, the double-pipe shape of the flow path 110 may increase the efficiency of the PTC heater 113.

According to exemplary aspects, the flow path 110 may include a plurality of PTC heaters 113 extending along an extending direction of the flow path 110, and the plurality of PTC heaters 113 may be equally spaced apart in a circumferential direction of the flow path 110. According to exemplary aspects, the plurality of PTC heaters 113 may be spaced at a certain distance along an extending direction of the flow path 110. Accordingly, the plurality of PTC heaters 113 may be equally spaced within the flow path 110 to uniformly heat the water, even if they do not completely surround the inner pipe 111.

According to exemplary aspects, the length of each of the plurality of PTC heaters 113 may range from about 20% to 80% of the total length of the flow path 110. According to exemplary aspects, the length of each of said plurality of PTC heaters 113 may range from about 30% to about 70% of the total length of the flow path 110. The PTC heaters 113 are characterized by rapid heating, and the plurality of PTC heaters 113 may be equally spaced apart within the flow path 110. Accordingly, even if the length of each of the plurality of PTC heaters 113 is shorter than the total length of the flow path 110, the water can be heated uniformly and quickly. Furthermore, energy efficiency may be improved as the area occupied by the PTC heaters 113 within the flow path 110 is reduced.

According to exemplary aspects, the flow path 110 may further include a plurality of thermally conductive blades 114 protruding inwardly. The plurality of thermally conductive blades 114 may be equally spaced apart along the circumferential direction of the flow path 110. The plurality of thermally conductive blades 114 may be equally spaced apart along an extending direction of the flow path 110. In this way, the plurality of thermally conductive blades 114 can quickly transfer heat generated by the plurality of PTC heaters 113 to the water.

According to exemplary aspects, the plurality of thermally conductive blades 114 may have a shape that decreases in thickness along an inward direction of the flow path 110. This may prevent impeded mobility of water in the flow path 110. The shape of the extension of the plurality of thermally conductive blades 114 may be straight, as shown in FIG. 5, or may be curved.

The plurality of thermally conductive blades 114 can be made of any material capable of transferring thermal energy. For example, the plurality of thermally conductive blades 114 may include metal. According to exemplary aspects, the plurality of thermally conductive blades 114 may include aluminum, copper, iron, tungsten, nickel, and alloys containing one or more of the foregoing.

According to exemplary aspects, the water supplied to the electrode sheet 200 by the plurality of spray nozzles 120 may have a temperature ranging from about 50°C to about 90°C. According to exemplary aspects, the water supplied to the electrode sheet 200 by the plurality of spray nozzles 120 may have a temperature ranging from about 70°C to about 90°C. According to exemplary aspects, the water supplied to the electrode sheet 200 may be in a liquid state. Since the water is in a liquid state, it can be easily sprayed toward the non-coated part of the electrode sheet 200, thereby preventing spraying toward the coated part. Accordingly, cracks and wrinkles that occur in the non-coated part can be prevented, thereby reducing the defects of the electrode and improving the stability of the electrode.

### (Second aspect)

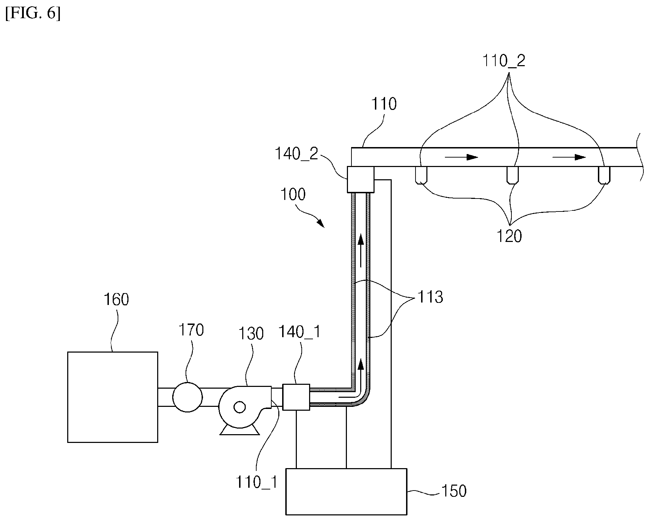

FIG. 6 is a drawing illustrating an electrode sheet drying device, according to other exemplary aspects.

According to exemplary aspects, the electrode sheet drying device 100 may further include a control part 150 and a first temperature sensor 140_1. According to exemplary aspects, the electrode sheet drying device 100 may further include a control part 150, a first temperature sensor 140_1, and a second temperature sensor 140_2.

The first temperature sensor 140_1 may measure the temperature of the water entering the flow path 110. The second temperature sensor 140_2 may measure the temperature of the water heated by the PTC heater 113 downstream of the PTC heater 113. Based on the temperature of the water as measured by the first temperature sensor 140_1 and the second temperature sensor 140_2, it may be determined whether the PTC heater 113 is operated or not. According to exemplary aspects, the first temperature sensor 140_1 may be included in the pump 130 and the second temperature sensor 140_2 may be included in the flow path 110. According to exemplary aspects, the first temperature sensor 140_1 and the second temperature sensor 140_2 may be included in the PTC heater 113. For example, the PTC thermistor may include the first temperature sensor 140_1 and the second temperature sensor 140_2.

The control part 150 may determine whether to operate the PTC heater 113 based on the temperature of the water measured by the first temperature sensor 140_1 and the second temperature sensor 140_2. If the temperature of the water detected by the first temperature sensor 140_1 is lower than the set temperature, the control part 150 may operate the PTC heater 113. The set temperature may be in the range of about 50°C to 70°C.

The second temperature sensor 140_2 may be located downstream of the PTC heater 113, and may measure the temperature of the water heated thereby. The control part 150 may stop the operation of the PTC heater 113 when the temperature of the water, as measured by the second temperature sensor 140_2, is in the range of about 70°C to about 90°C. Thereby, the temperature of the water may be maintained at a constant temperature range.

According to exemplary aspects, the electrode sheet drying device 100 may further include a storage tank 160 and a flow regulating part 170. The storage tank 160 may provide a place where water is stored before being moved to the flow path 110. The flow regulating part 170 may measure a flow rate and flow volume of the water. Based on the data sensed by the flow regulating part 170, the intensity of the pump 130 can be adjusted.

### Electrode sheet drying method

### (First aspect)

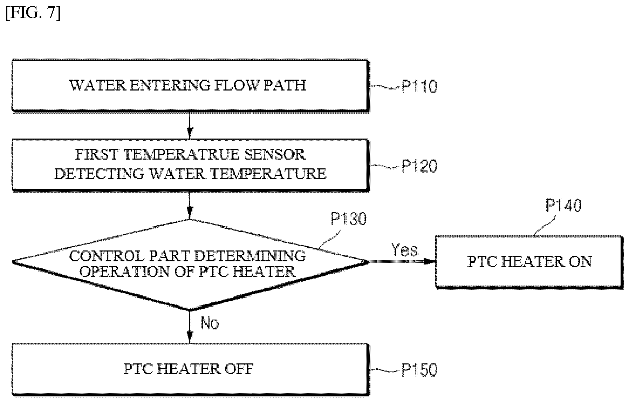

FIG. 7 is a flowchart illustrating an electrode sheet drying method, according to a first aspect.

Referring to FIGS. 3, 6 and 7, the electrode sheet drying method includes: a step P110 in which a pump 130 supplies water to a flow path 110 having an inlet 110_1 and an outlet 110_2; a step P120 in which a first temperature sensor 140_1 measures a temperature of the water entering the inlet 110_1; a step P130 of determining, by the control part 150, whether the positive temperature coefficient (PTC) heater 113 needs to be operated based on the temperature of the water; and, if the control part 150 determines that the PTC heater 113 needs to be operated, a step P140 of turning on the PTC heater 113 contained within the flow path 110. According to exemplary aspects, the method of drying the electrode sheet may further include the step of spraying the water raised in temperature by the PTC heater 113 onto the electrode sheet 200 from a plurality of spray nozzles 120 connected to the outlet 110_2 of the flow path 110, wherein the temperature of the water sprayed from the plurality of spray nozzles 120 may range from about 50°C to 90°C. According to exemplary aspects, the temperature of the water sprayed from the plurality of spray nozzles 120 may range from about 70°C to 90°C.

The step P110 wherein the pump 130 supplies the water to the flow path 110 having an inlet 110_1 and an outlet 110_2 may be a step wherein the water stored in the storage tank 160 is introduced into the inlet 110_1 of the flow path 110. A flow regulating part 170 disposed in the flow path 110 may detect the flow rate and flow volume of said water entering the flow path 110.

The step of determining, by the control part 150, whether the PTC heater 113 needs to be operated based on the temperature of the water may be a step of determining whether the temperature of the water entering the inlet 110_1 is below a set temperature. The set temperature is a temperature that determines whether the PTC heater 113 should be operated, and the set temperature may be in the range of about 50°C to 70°C. According to exemplary aspects, if the temperature of the water is less than about 50°C, the control part 150 may determine that it is necessary to operate the PTC heater 113. According to exemplary aspects, if the temperature of the water is less than about 60 °C, the control part 150 may determine that it is necessary to operate the PTC heater 113.

On the other hand, if the control part 150 determines that operation of the PTC heater 113 is not necessary, the method of drying the electrode sheet may further include a step P150 of stopping operation of the PTC heater 113. Alternatively, if the PTC heater 113 was not operating, the control part 150 may maintain the stopping of the PTC heater 113. For example, the PTC heater 113 may not operate if the temperature of the water entering the flow path 110 is above about 50°C.

### (Second aspect)

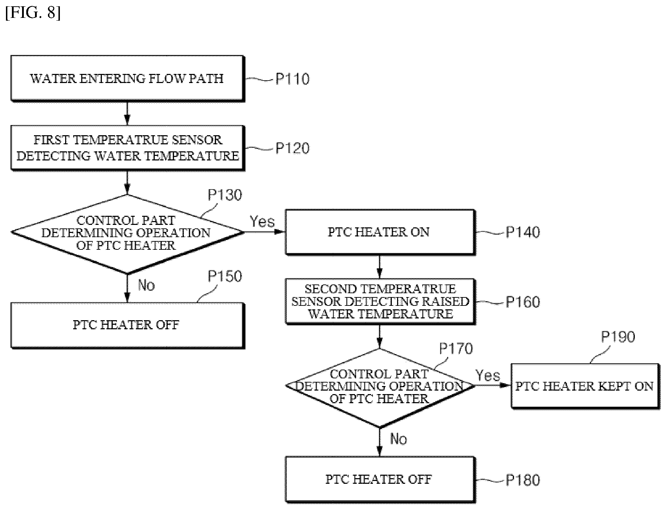

FIG. 8 is a flowchart illustrating a method of drying an electrode sheet, according to a second aspect.

Referring to FIGS. 3, 6, and 8, the electrode sheet drying method may further include, after the step of operating the PTC heater 113, a step P160 in which the second temperature sensor 140_2 located downstream of the PTC heater 113 measures the temperature of the water, and a step P170 in which the control part 150 determines the need to operate the PTC heater 113 based on the temperature of the water. The second temperature sensor 140_2 may be included in the flow path 110. If the temperature of the water as measured by the second temperature sensor 140_2 is in the range of about 70°C to about 90°C, a step P180 may be performed in which the control part 150 turns off operation of the PTC heater 113. According to exemplary aspects, if the temperature of the water measured by the second temperature sensor 140_2 is in the range of about 80°C to about 90°C, the step P180 in which the control part 150 turns off the operation of the PTC heater 113 may be performed.

On the other hand, if the control part 150 determines that operation of the PTC heater 113 is not required, the method of drying the electrode sheet may further include a step P190 of maintaining operation of the PTC heater 113. For example, if the temperature of the water detected by the second temperature sensor 140_2 is less than about 70°C, the control part 150 may maintain operation of the PTC heater 113.

### [Reference numerals]

100: ELECTRODE SHEET DRYING DEVICE
101: DRYING OVEN
102: HOT AIR SUPPLY DEVICE
110: FLOW PATH
110_1: INLET
110_2: OUTLET
111: INNER PIPE
112: OUTER PIPE
113: PTC HEATER
114: THERMALLY CONDUCTIVE BLADE
120: SPRAY NOZZLE
130: PUMP
140_1: FIRST TEMPERATURE SENSOR
140_2: SECOND TEMPERATURE SENSOR
150: CONTROL PART
160: STORAGE TANK
170: FLOW REGULATING PART
200: ELECTRODE SHEET
201: SLURRY
202: ELECTRODE CURRENT COLLECTOR

## Claims

1. An electrode sheet drying device comprising:
a drying oven for drying an electrode sheet formed by applying a slurry onto an electrode current collector;
a plurality of spray nozzles disposed within the drying oven and disposed along a width direction of the electrode sheet, wherein the plurality of spray nozzles is configured to spray water onto the electrode sheet;
a flow path configured to guide the water to the plurality of spray nozzles; and
a pump configured to move the water through the flow path, wherein
the flow path comprises one or more positive temperature coefficient (PTC) heaters therein.

2. The electrode sheet drying device of claim 1, wherein
the flow path comprises a plurality of PTC heaters extending along an extending direction of the flow path, and
the plurality of PTC heaters is equally spaced apart in a circumferential direction of the flow path.

3. The electrode sheet drying device of claim 2, wherein
a length of each of the plurality of PTC heaters ranges from 20% to 80% of a total length of the flow path.

4. The electrode sheet drying device of claim 1, wherein
the flow path comprises a plurality of PTC heaters, wherein
the plurality of PTC heaters are equally spaced apart along an extending direction of the flow path.

5. The electrode sheet drying device of claim 1, wherein
the flow path has a double-pipe shape comprising an inner pipe and an outer pipe surrounding the inner pipe, wherein
the one or more PTC heaters are positioned between the inner pipe and the outer pipe.

6. The electrode sheet drying device of claim 1, wherein
the flow path comprises a plurality of thermally conductive blades protruding inwardly.

7. The electrode sheet drying device of claim 1, further comprising a control part, wherein
the pump comprises a first temperature sensor, and wherein
the control part is configured to regulate operation of the one or more PTC heaters based on a temperature of the water measured by the first temperature sensor.

8. The electrode sheet drying device of claim 1, further comprising a first temperature sensor and a second temperature sensor, wherein
the first temperature sensor is configured to measure the temperature of the water entering the flow path, and
the second temperature sensor is configured to measure the temperature of the water heated by the one or more PTC heaters downstream of the one or more PTC heaters.

9. The electrode sheet drying device of claim 8, wherein
the first temperature sensor is included in the pump, and
the second temperature sensor is included in the flow path.

10. The electrode sheet drying device of claim 8, wherein
the first temperature sensor and the second temperature sensor are included in the one or more PTC heaters.

11. The electrode sheet drying device of claim 8, further comprising a control part, wherein
the control part is configured to determine whether to operate the one or more PTC heaters based on the t temperature of the water detected by the first temperature sensor and the temperature of the water detected by the second temperature sensor.

12. The electrode sheet drying device of claim 1, wherein
the water sprayed onto the electrode sheet has a temperature in the range of 50°C to 90°C.

13. The electrode sheet drying device of claim 1, further comprising:
a storage tank in which the water to be supplied to the plurality of spray nozzles is stored, wherein
the flow path further comprises a flow regulating part.

14. A method for drying an electrode sheet, comprising:
supplying water, by a pump, to a flow path having an inlet and an outlet;
measuring, by a first temperature sensor, a temperature of the water entering the inlet;
determining, by a control part, whether one or more positive temperature coefficient (PTC) heaters need to be operated based on the temperature of the water;
turning on the one or more PTC heaters included within the flow path, if the control part determines that it is necessary to operate the one or more PTC heaters; and
spraying the water, which has been raised in temperature by the one or more of the PTC heaters, onto the electrode sheet from a plurality of spray nozzles connected to the outlet of the flow path, wherein the temperature of the water sprayed from the plurality of spray nozzles is in the range of 50°C to 90°C.

15. The method of claim 14, further comprising:
after the step of turning on the one or more PTC heaters,
turning off operation of the one or more PTC heaters if the temperature of the water as measured by a second temperature sensor is in the range of 70°C to 90°C, wherein the second temperature sensor is included in the flow path and located downstream of the one or more PTC heaters.
